# EUROPÄISCHE PATENTSCHRIFT

(11) **EP 1 559 951 B1**
(45) Veröffentlichungstag und Bekanntmachung des Hinweises auf die Patenterteilung: **07.05.2008**
(21) Anmeldenummer: 05100287.1
(22) Anmeldetag: 19.01.2005
(51) Int. Cl.: F21S 8/10, F21V 17/18, B60Q 1/04

(54) **Fahrzeugleuchte und Verfahren zur Montage der Fahrzeugleuchte**
Vehicle lamp and method of mounting the vehicle lamp
Feu de véhicule et procédé de montage pour feu de véhicule

(30) Priorität: 28.01.2004 DE 102004004129
(43) Veröffentlichungstag der Anmeldung: 03.08.2005
(73) Patentinhaber: Hella KGaA Hueck & Co., 59552 Lippstadt (DE)
(72) Erfinder: Branderm, Rolf, 33449 Langenberg (DE); Umakanthan, Amarnath, 59557 Lippstadt (DE)

(56) Entgegenhaltungen:
- DD-A1- 262 633
- DE-U1- 20 302 651
- US-A- 5 143 331

## Beschreibung

Die Erfindung betrifft eine Fahrzeugleuchte mit einem Gehäuse nach dem Oberbegriff des Patentanspruchs 1.

Aus der DE 203 02 614 U1 ist eine Fahrzeugleuchte bekannt, die aus einem Gehäuse, einer in dem Gehäuse angeordneten Leiterplatte mit einer darauf kontaktierten LED als Lichtquelle und einer das Gehäuse abschließenden Lichtscheibe besteht. Das Gehäuse weist in seinem rückwärtigen Bereich einen von dem Gehäuse abragenden Dom auf, durch den die elektrische Kontaktierung der Fahrzeugleuchte hindurchgeführt ist. Um die Fahrzeugleuchte an der Fahrzeugkarosserie zu befestigen, sind in das Gehäuse zumindest zwei Bohrungen zum Durchführen von Befestigungsschrauben eingebracht. Um jetzt die Leuchte an der Fahrzeugkarosserie oder an einem dafür an der Fahrzeugkarosserie angeordneten Halteelement zu montieren, muss die Fahrzeugkarosserie eine Öffnung für den Dom und zusätzlich zu den Bohrungen des Gehäuses passende Bohrungen aufweisen. Bei der Montage wird die Fahrzeugleuchte auf die Fahrzeugkarosserie oder das Halteelement aufgesetzt und die Befestigungsschrauben werden durch die Bohrungen des Gehäuses und der Fahrzeugkarosserie oder des Halteelementes hindurchgeschoben. Dann muss in einem zweiten Montageschritt jeweils eine Gewindemutter auf die Befestigungsschrauben geschraubt werden um diese in einem dritten Montageschritt mittels geeigneter Werkzeuge festzuschrauben und so die Fahrzeugleuchte zu befestigen. Nachteilig an der bekannten Fahrzeugleuchte und dem damit verbundenen Verfahren zur Montage ist es, dass das Gehäuse zusätzliche Bohrungen und die Fahrzeugkarosserie oder das Halteelement entsprechend fluchende Bohrungen für die Befestigungsschrauben aufweisen müssen. Weiterhin ist es nachteilig, dass bei der Montage sowohl von der Vorder- als auch von der Rückseite her montiert werden muss und dass für die Montage Werkzeug benötigt wird.

Aus der DD 262 633 A1 ist eine Fahrzeugleuchte mit einem Gehäuse und einem von dem Gehäuse abragenden Dom bekannt. Der Dom ragt von einer Rückseite des Gehäuses ab und ermöglicht eine Festsetzung des Gehäuses an einem Aufnahmebereich der Fahrzeugkarosserie. Nachteilig an der bekannten Fahrzeugleuchte ist, dass ein weiterer Dom zum Arretieren des Gehäuses an der Fahrzeugkarosserie vorgesehen sein muss, der in eine korrespondierende Öffnung eingreift, nachdem das Gehäuse nach Einsetzen des Domes in den Aufnahmebereich verdreht worden ist. Nachteilig an der bekannten Fahrzeugleuchte ist ferner, dass zum Demontieren derselben ein Schraubendreher in einen Demontageschlitz der Leuchte eingeführt werden muss, um ein Anheben der Fahrzeugleuchte und ein anschließendes Herausdrehen entgegen der Einbauverdrehung zu ermöglichen.

Aus der DE 203 02 651 U1 ist eine Fahrzeugleuchte mit einem Gehäuse und einem rückseitig abragenden Dom bekannt. Zur Befestigung der Fahrzeugleuchte an einer Fahrzeugkarosserie wird die Fahrzeugleuchte im Bereich eines kreisrunden Kragens seitlich in einen Schlitz einer Rastaufnahme eingesetzt, so dass das Gehäuse der Fahrzeugleuchte rastend in der Ω-förmigen Rastaufnahme gehalten ist.

Aufgabe der Erfindung ist es, eine Fahrzeugleuchte gemäß dem Oberbegriff des Anspruchs 1, sowie das Verfahren zur Montage einer derartigen Fahrzeugleuchte so weiterzubilden, dass sie einfach und kostengünstig herstellbar ist und zusätzlich schnell und ohne Montagewerkzeuge an einer Fahrzeugkarosserie oder einem dafür an der Fahrzeugkarosserie angeordneten Halteelement montierbar ist.

Zur Lösung dieser Aufgabe weist die Erfindung die Merkmale des Patentanspruchs 1 auf.

Dadurch, dass die Fahrzeugleuchte mittels des vom rückwärtigen Bereich des Gehäuses abragenden Doms in dem Aufnahmebereich der Fahrzeugkarosserie oder dem dafür an der Fahrzeugkarosserie angeordneten Halteelement festsetzbar ist, ist die Fahrzeugleuchte einfach und kostengünstig herstellbar, da sie keine zusätzlichen Bereiche aufweisen muss, in denen Befestigungsschrauben oder andere Befestigungselemente angeordnet werden können, was Material und am Fahrzeug zusätzlich Bauraum einspart. Der an der Fahrzeugleuchte angeordnete Dom erfüllt somit zum einen die Aufgabe, dass durch ihn die elektrische Kontaktierung der Fahrzeugleuchte hindurchgeführt wird und zum anderen die Aufgabe, dass mittels des Doms die Fahrzeugleuchte festgesetzt wird. Die erfindungsgemäße Ausgestaltung zeichnet sich dadurch aus, dass der abragende Dom zumindest einen kragenförmigen Bereich aufweist, dass der Aufnahmebereich zumindest eine langlochförmige Öffnung aufweist, die derart ausgebildet ist, dass zumindest ein Bereich der langlochförmigen Öffnungen im Breitenquerschnitt größer als der Querschnitt des kragenförmigen Bereichs des Doms und zumindest ein weiterer Bereich der langlochförmigen Öffnung im Breitenquerschnitt kleiner als der Querschnitt des kragenförmigen Bereichs des Doms ausgebildet ist und wobei der in einem rückwärtigen Bereich der Fahrzeugleuchte angeordnete Dom in der langlochförmigen Öffnung verschiebbar und dadurch festsetzbar ist. Einen Dom mit einem kragenförmigen Bereich auszubilden ist bei den üblicherweise im Kunststoffspritzgussverfahren hergestellten Gehäusen spritztechnisch einfach realisierbar. Weiterhin ist die langlochförmige Öffnung mit den unterschiedlichen Breitenquerschnitten einfach herzustellen, da sie beispielsweise in die Fahrzeugkarosserie gestanzt werden kann. Die langlochförmige Öffnung ist ähnlich einem Schlüsselloch ausgebildet und ermöglicht so das Durchstecken und das Verschieben des Doms in der Öffnung. Um die Fahrzeugleuchte in der festgesetzten Position in dem Aufnahmebereich dauerhaft sicher und klapperfrei zu halten, weist erfindungsgemäß einen Übergangsbereich zwischen den zumindest zwei Unterschiedlichen Breitenquerschnittsabmessungen der langlochförmigen Öffnung federnde Rastelemente auf. Besonders sicher und klapperfrei wird die Fahrzeugleuchte gehalten, wenn der Breitenquerschnitt der federnden Rastelement in Normalstellung geringer ist, als der Querschnitt des Doms.

Um eine Montage von mehreren Seiten zu ermöglichen, und so ein Höchstmaß an Flexibilität beim Einsatz derartiger Fahrzeugleuchten zu gewährleisten, weist die langlochförmige Öffnung zumindest zwei Bereiche auf, deren Breitenquerschnitt größer als der Querschnitt des kragenförmigen Bereichs des Doms list.

Um insbesondere größere Fahrzeugleuchten sicher und fest an der Fahrzeugkarosserie oder einem dafür an der Fahrzeugkarosserie vorgesehenen Halter festzusetzen, weist bei einer vorteilhaften Ausgestaltung der Erfindung die zumindest eine langlochförmige Öffnung die gleiche Anzahl an Bereichen auf, deren Breitenquerschnitt größer als der Querschnitt des kragenförmigenBereichs des Doms und deren Breitenquerschnitt kleiner als der Querschnitt des kragenförmigen Bereichs des Doms ausgebildet ist.

Eine Bewegung der Fahrzeugleuchte in der festgesetzten Position in Achsrichtung des Doms wird bei einer vorteilhaften Weiterbildung der erfindungsgemäßen Fahrzeugleuchte dadurch verhindert, dass der Abstand zwischen der rückwärtigen Wand des Gehäuses der Fahrzeugleuchte und dem zum Gehäuse hinweisenden Rand des an dem Dom angeordneten kragenförmigen Bereichs nur geringfügig größer ist, als die Dicke des die langlochförmige Öffnung umgebenen Karosseriebereichs oder Halteelementes. So wird ein Verschieben der Fahrzeugleuchte in der langlochförmigen Öffnung gerade noch ermöglicht, aber ein Klappern der Fahrzeugleuchte ausreichend verhindert.

Um nach der Montage der Fahrzeugleuchte eine unbeabsichtigte Demotage zu verhindern, weist der die langlochförmige Öffnung umgebeneKarosseriebereich oder das die langlochförmige Öffnung umgebene Halteelement einen umlaufenden Steg auf, der mit der Außenkontur der Fahrzeugleuchte korrespondiert und diese im eingebauten Zustand umfasst. Damit eine derart ausgestaltete Fahrzeugleuchte aber dennoch demontierbar ist, weist der umlaufende Steg bei einer vorteilhaften Weiterbildung zumindest eine Unterbrechung auf, so dass die Fahrzeugleuchte mittels eines Werkzeugs geringfügig über den Steg gedrückt und dann in der langlochförmigen Öffnung verschoben werden kann. Hierzu kann die Fahrzeugleuchte im Außenbereich ihrer Kontur federnde Bereiche aufweisen.

Damit die Fahrzeugleuchte in der festgesetzten Position gegen ein Verdrehen um die Längsachse des Doms geschützt ist und somit die gewünschte Lichtverteilung gewährleistet bleibt, weist der die langlochförmige Öffnung umgebene Karosseriebereich oder das die langlochförmige Öffnung umgebene Halteelement zumindest einen weiteren Führungsbereich für die Fahrzeugleuchte auf.

Die Aufgabe zur Weiterbildung des Montageverfahrens einer derartigen Fahrzeugleuchte wird mit den Merkmalen des Patentanspruchs 9 gelöst.

Das Verfahren zur Montage ist vorteilhaft derart ausgebildet, dass in einem ersten Montageschritt der Dom mit dem daran angeordneten kragenförmigen Bereich durch den Bereich der langlochförmigen Öffnung durchgesteckt wird, dessen Breitenquerschnitt größer als der Querschnitt des kragenförmigen Bereichs des Doms ist und dass in einem zweiten Montageschritt die Fahrzeugleuchte entsprechend der Längsausrichtung der langlochförmigen Öffnung in Richtung des Bereichs der langlochförmigen Öffnung verschoben wird, dessen Breitenquerschnitt kleiner als der Querschnitt des kragenförmigen Bereichs des Doms ausgebildet ist. Die Fahrzeugleuchte wird dauerhaft sicher und klapperfrei in dem Aufnahmebereich gehalten, da das Verfahren zur Montage zusätzlich derart ausgebildet ist, dass die in einem Übergangsbereich zwischen den zumindest zwei unterschiedlichen Breitenquerschnittsabmessungen der langlochförmigen Öffnung angeordneten federnden Rastelemente während des zweiten Montageschritts durch den Dom erst zu den Längskanten der langlochförmigen Öffnung gedrückt werden und, sobald der Dom in den Bereich der langlochförmigen Öffnung verschoben ist, dessen Breitenquerschnitt kleiner als der Querschnitt des kragenförmigen Bereichs des Doms ist, in ihre Normalstellung zurückfedern. Somit wird der Dom gegen die Kraft der federnden Rastelemente in dem Bereich der langlochförmigen Öffnung gehalten, dessen Breitenquerschnitt kleiner als der Querschnitt des kragenförmigen Bereichs des Doms ist.

Nachfolgend sind Ausführungsbeispiele der Erfindung anhand von Zeichnungen näher erläutert. Es zeigen:
- Figur 1:: eine perspektivische Ansicht von Unten einer erfindungsgemäßen Fahrzeugleuchte mit einem Halteelement zum Anbau an ein Fahrzeug,
- Figur 2:: die in Figur 1 gezeigte Fahrzeugleuchte in einer perspektivischen Ansicht von Oben und
- Figur 3a bis 3d:: Gestaltungsvarianten des Aufnahmenbereichs.

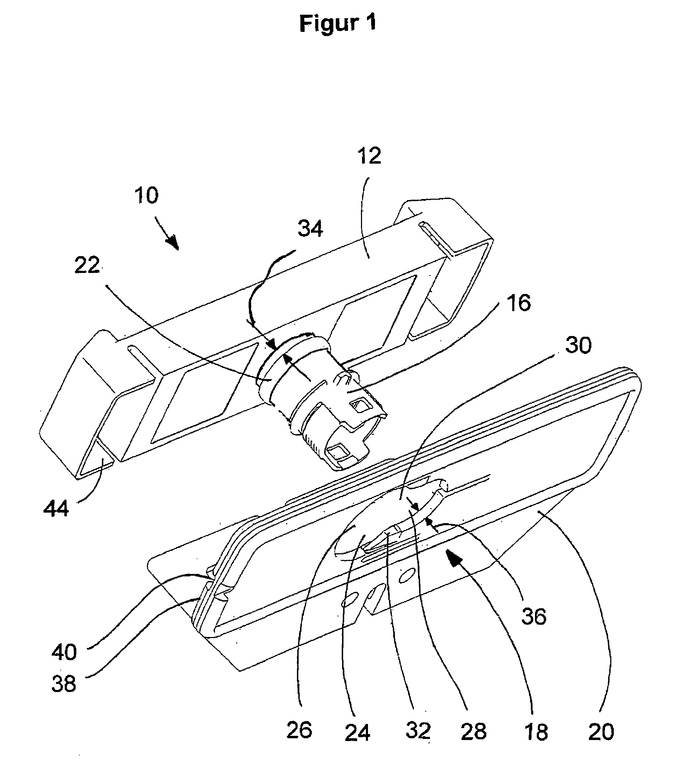

Figur 1 zeigt in einer perspektivischen Ansicht von Unten eine erfindungsgemäße Fahrzeugleuchte (10) im nicht montiertem Zustand, sowie ein Halteelement (20), welches einen Aufnahmebereich (18) für die Fahrzeugleuchte (10) aufweist, wobei das Halteelement (20) an einer nicht dargestellten Fahrzeugkarosserie angeordnet ist. An den rückwärtigen Bereich des Gehäuses (12) ist ein vom diesem abragender Dom (16) angeformt, durch den die elektrische Kontaktierung der Fahrzeugleuchte (10) hindurchgeführt werden kann. Der Dom (16) weist neben Halte- und Rastelementen für die nicht dargestellte Kontaktanordnung einen kragenförmigen Bereich (22) auf. Bei der Montage der Fahrzeugleuchte (10) an dem Halteelement (20) wird der Dom (16) soweit durch den ersten Bereich (26) der langlochförmigen Öffnung (24) des Aufnahmebereichs (18) des Halteelementes (20) durchgesteckt, bis der rückwärtige Bereich des Gehäuses (12) an dem Halteelement (20) zur Auflage kommt. Der erste Bereich (26) der langlochförmigen Öffnung (24) weist hierzu einen Breitenquerschnitt auf, der größer als der Querschnitt des kragenförmigen Bereichs (22) des Doms (16) ist. Nun wird die Fahrzeugleuchte (10) entsprechend der Längsausrichtung der langlochförmigen Öffnung (24) in Richtung des zweiten Bereichs (28) verschoben. Im Übergangsbereich (30) zwischen den beiden Bereichen (26, 28) mit unterschiedlichen Breitenquerschnittabmessungen sind federnde Rastelemente (32) angeordnet, die während der Schubbewegung der Fahrzeugleuchte (10) durch den Dom (16) zu den Längskanten der langlochförmigen Öffnung (24) gedrückt werden und die sobald sich der Dom (16) in dem zweiten Bereich (28) befindet, in ihre Normalstellung zurückfedern. Diese Rastelement (32) bewirken, dass der Dom (16) sicher und dauerhaft in dem zweiten Bereich (28) festgesetzt wird und verhindern so ein Klappern der Fahrzeugleuchte (10) aufgrund von ungewollten Schwingungsbewegungen in Längsausdehnung der langlochförmigen Öffnung (24).

Dadurch, dass der Abstand (34) zwischen dem rückwärtigen Bereich des Gehäuses und dem zu diesem Bereich hinweisenden Rand des kragenförmigen Bereiches (22) nur geringfügig größer ist als die Dicke (36) des die langlochförmige Öffnung (24) umgebenen Halteelementes (20), wird ein Klappern der Fahrzeugleuchte (10) aufgrund von ungewollten Schwingungsbewegungen in Längsrichtung des Doms (16).

Um ein Verschieben der Fahrzeugleuchte (10) in der langlochförmigen Öffnung (24) und somit eine ungewollte Demontage zu verhindern, weist das Halteelement (20) zusätzlich neben den Rastelementen (32) einen umlaufenden Steg (38) auf, der mit der Außenkontur der Fahrzeugleuchte (10) korrespondiert und diese im eingebauten Zustand umschließt. Um jetzt die Fahrzeugleuchte (10) montieren zu können, muss diese zumindest an einer in Richtung der Längsausdehnung der langlochförmigen Öffnung (24) liegenden Seitenfläche über den Steg (38) geschoben werden. Hierzu weist das Gehäuse (12) speziell ausgebildete federnde Bereiche (44) auf, die während der Montage in Richtung entgegen des Halteelementes (20) gedrückt werden und sobald die Fahrzeugleuchte (10) montiert ist, in ihre Solllage zurückfedern. Damit die Fahrzeugleuchte (10) dennoch im Reparaturfall demontierbar ist, weißt der Steg (38) zumindest eine Unterbrechung (40) auf, durch die der federnde Bereich (44) des Gehäuses (12) mittels eines Hilfswerkzeuges hintergreifbar ist, über den Steg (38) gehoben wird und die Fahrzeugleuchte (10) so in der langlochförmigen Öffnung (24) von dem zweiten Bereich (28) in den ersten Bereich (26) verschoben werden kann.

Durch die Rastelemente (32), die aufeinander abgestimmten Abstand (34) und Dicke (36) und den umlaufenden Steg (38) wird die Fahrzeugleuchte (10) sicher und dauerhaft an dem Halteelement (20) festgesetzt.

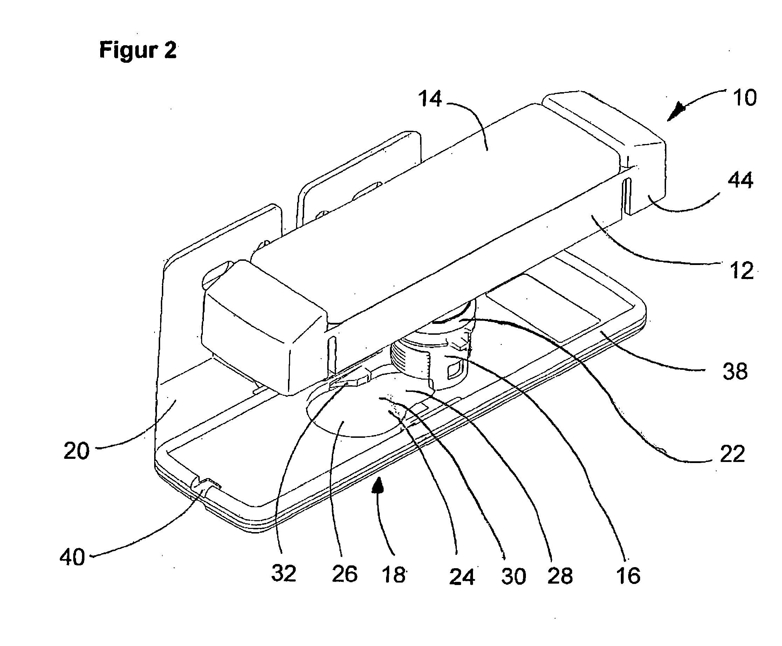

Figur 2 zeigt die in Figur 1 dargestellte Fahrzeugleuchte (10) in einer perspektivischen Ansicht von Oben. Die Fahrzeugleuchte (10) besteht aus einem Gehäuse (12), welches durch eine Lichtscheibe (14) abgedeckt ist. Der weitere Aufbau der Fahrzeugleuchte (10), des Halteelementes (20), des Verfahrens zur Montage und des Verfahrens zu Demontage ist in der Figurenbeschreibung zu Figur 1 hinlänglich erläutert worden, so dass es hier keiner Weiderholung bedarf.

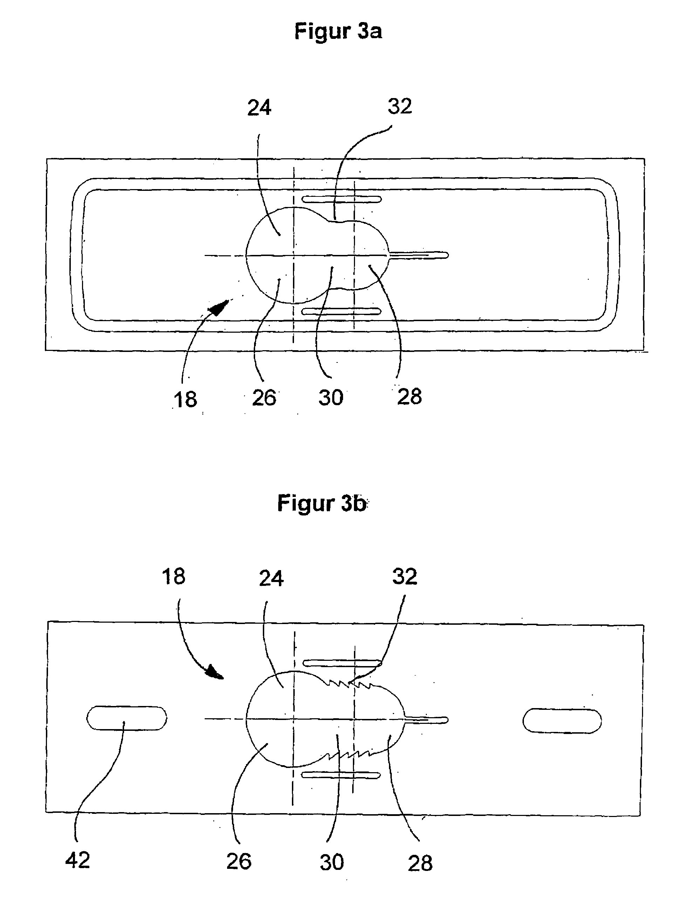

Die Figuren 3a bis 3d zeigen unterschiedliche Gestaltungsvarianten des Aufnahmebereichs (18).

In Figur 3a ist der Aufnahmebereich (18) ähnlich dem in Figur 1 und Figur 2 gezeigten Aufnahmebereich (18) ausgebildet. Unterschiedlich zu dem bereits gezeigten ist es, dass in der langlochförmigen Öffnung (24) die in dem Übergangsbereich (30) zwischen dem ersten Bereich (26) und zweiten Bereich (28) angeordneten Rastelemente (32) ihre federnde Wirkung über Einschnitte im benachbarten, vollflächigen Materialbereich erzielen.

In Figur 3b sind die in dem Übergangsbereich (30) zwischen dem ersten Bereich (26) und zweiten Bereich (28) angeordneten Rastelemente (32) sägezahnförmige entgegen der Demontagerichtung der Fahrzeugleuchte ausgebildet, um so eine Demontage einer einmal montierten Fahrzeugleuchte zu verhindern. Diese Maßnahme kann beispielsweise zur Diebstahlprävention dienen. Weiterhin weist das Halteelement gemäß Figur 3b Führungsbereiche (42) auf, in die an den rückwärtigen Bereich der Fahrzeugleuchte angeformte Dorne eingreifen, um ein Verdrehen der Fahrzeugleuchte zu verhindern.

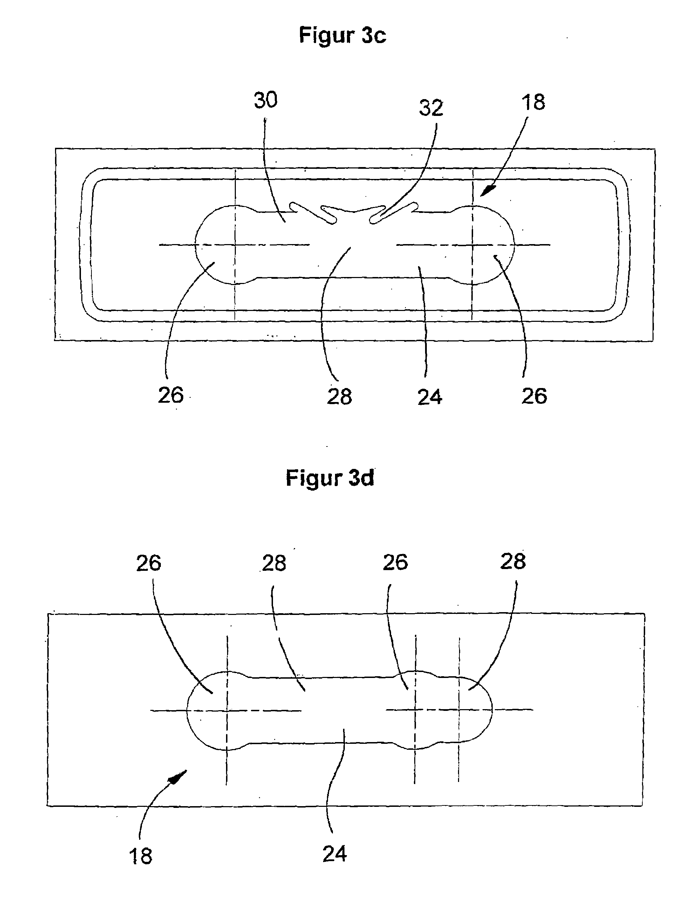

Der Aufnahmebereich (18) gemäß Figur 3c weist eine langlochförmige Öffnung (24) mit zwei ersten Bereichen (26) auf, so dass die Fahrzeugleuchte von zwei Seiten her montierbar ist. Im Zentralbereich der langlochförmigen Öffnung (24) ist ein zweiter Bereich (28) ausgebildet. Die Fahrzeugleuchte wird im montiertem Zustand in diesem zweiten Bereich (28) durch jeweils rechts und links im Übergangsbereich (30) angeordnete Rastelemente (32) gehalten.

Figur 3d zeigt einen Aufnahmebereich (18) für Fahrzeugleuchten, die über zwei beabstandet angeordnete, vom rückwärtigen Bereich des Gehäuses abragende Dome verfügt. Die beiden Dome werden durch die beiden ersten Bereiche (26) der langlochförmigen Öffnung (24) durchgesteckt und dann wird die Fahrzeugleuchte gemäß der Längserstreckung des langlochförmigen Öffnung (24) in die beiden zweiten Bereiche (28) verschoben und dadurch festgesetzt.

### Bezugszeichenliste:

- 10: Fahrzeugleuchte
- 12: Gehäuse
- 14: Lichtscheibe
- 16: Dom
- 18: Aufnahmebereich
- 20: Halteelement
- 22: kragenförmiger Bereich
- 24: langlochförmige Öffnung
- 26: erster Bereich
- 28: zweiter Bereich
- 30: Übergangsbereich
- 32: Rastelement
- 34: Abstand
- 36: Dicke
- 38: Steg
- 40: Unterbrechung
- 42: Führungsbereich
- 44: federnder Bereich

## Patentansprüche

1. Fahrzeugleuchte (10) mit einem Gehäuse (12), einer das Gehäuse (12) abschließenden Lichtscheibe (14), zumindest einer in der Fahrzeugleuchte (10) angeordneten Lichtquelle, zumindest einem von einem rückwärtigen Bereich des Gehäuses (12) abragenden Dom (16) zur Hindurchführung der elektrischen Kontaktierung der Fahrzeugleuchte (10) und zumindest einem Aufnahmebereich (18) für die Fahrzeugleuchte (10) an einer Fahrzeugkarosserie oder an einem dafür an der Fahrzeugkarosserie angeordneten Halteelement (20), wobei die Fahrzeugleuchte (10) mittels des vom rückwärtigen Bereich des Gehäuses (12) abragenden Doms (16) in dem Aufnahmebereich (18) der Fahrzeugkarosserie oder dem dafür an der Fahrzeugkarosserie angeordneten Halteelement (20) festsetzbar ist, **dadurch gekennzeichnet, dass** der abragende Dom (16) zumindest einen kragenförmigen Bereich (22) aufweist, dass der Aufnahmebereich (18) zumindest eine langlochförmige Öffnung (24) aufweist, die derart ausgebildet ist, dass zumindest ein Bereich (26) der langlochförmigen Öffnungen (24) im Breitenquerschnitt größer als der Querschnitt des kragenförmigen Bereichs (22) des Doms (16) und zumindest ein weiterer Bereich (28) der langlochförmigen Öffnung (24) im Breitenquerschnitt kleiner als der Querschnitt des kragenförmigen Bereichs (22) des Doms (16) ausgebildet ist und wobei der in einem rückwärtigen Bereich der Fahrzeugleuchte (10) angeordnete Dom (16) in der langlochförmigen Öffnung (24) verschiebbar und dadurch festsetzbar ist, dass ein Übergangsbereich (30) zwischen den Bereichen (26, 28) mit unterschiedlichen Breitenquerschnittsabmessungen der langlochförmigen Öffnung (24) federnde Rastelemente (32) aufweist.

2. Fahrzeugleuchte nach Anspruch 1, **dadurch gekennzeichnet, dass** die langloch-' förmige Öffnung (24) zumindest zwei Bereiche (26) aufweist, deren Breitenquerschnitt größer als der Querschnitt des kragenförmigen Bereichs (22) des Doms (16) ist.

3. Fahrzeugleuchte nach Anspruch 1 oder 2, **dadurch gekennzeichnet, dass** die langlochförmige Öffnung (24) die gleiche Anzahl an Bereichen (26,28) aufweist, deren Breitenquerschnitt größer als der Querschnitt des kragenförmigen Bereichs (22) des Doms (16) und deren Breitenquerschnitt kleiner als der Quer schnitt.des kragenförmigen Bereichs (22) des Doms (16) ausgebildet ist

4. Fahrzeugleuchte nach einem der Ansprüche 1 bis 3, **dadurch gekennzeichnet, dass** der Breitenquerschnitt der federnden Rastelemente (32) in Normalstellung geringer ist, als der Querschnitt des Doms (16).

5. Fahrzeugleuchte nach einem der Ansprüche 1 bis 4, **dadurch gekennzeichnet, dass** der Abstand (34) zwischen der rückwärtigen Wand des Gehäuses (12) der Fahrzeugleuchte (10) und dem zum Gehäuse (12) hinweisenden Rand des an dem Dom (16) angeordneten kragenförmigen Bereichs (22) nur geringfügig größer ist, als die Dicke (36) des die langlochförmige Öffnung (24) umgebenen Karosseriebereichs oder Halteelementes (20).

6. Fahrzeugleuchte nach einem der Ansprüche 1 bis 5, **dadurch gekennzeichnet, dass** der die langlochförmige Öffnung (24) umgebene Karosseriebereich oder das die langlochförmige Öffnung (24) umgebene Halteelement (20) einen umlaufenden Steg (38) aufweist, der mit der Außenkontur der Fahrzeugleuchte (10) korrespondiert und diese im eingebauten Zustand umfasst.

7. Fahrzeugleuchte nach Anspruch 6, **dadurch gekennzeichnet, dass** der umlaufende Steg (38) zumindest eine Unterbrechung (40) aufweist.

8. Fahrzeugleuchte nach einem der Ansprüche 1 bis 7, **dadurch gekennzeichnet, dass** der die langlochförmige Öffnung (24) umgebene Karosseriebereich oder das die langlochförmige Öffnung (24) umgebene Halteelement (20) zumindest einen weiteren Führungsbereich (42) für die Fahrzeugleuchte (10) aufweist.

9. Verfahren zur Montage einer gemäß der vorstehenden Ansprücheausgebildeten Fahrzeugleuchte (10), wobei die Fahrzeugleuchte (10) mittels einer Relativbewegung zwischen dem vom rückwärtigen Bereich des Gehäuses (12) abragenden Dom (16) und dem Aufnahmebereich (18) der Fahrzeugkarosserie oder dem dafür an der Fahrzeugkarosserie angeordneten Halteelement (20) festsetzbar ist, **dadurch gekennzeichnet, dass** in einem ersten Montageschritt der Dom (16) mit dem daran angeordneten kragenförmigen Bereich (22) durch den Bereich (26) der langlochförmigen Öffnung (24) durchgesteckt wird, dessen Breitenquerschnitt größer als der Querschnitt des kragenförmigen Bereichs (22) des Doms (16) ist, und dass in einem zweiten Montageschritt die Fahrzeugleuchte (10) entsprechend der Längsausrichtung der langlochförmigen Öffnung (24) in Richtung des Bereichs (28) der langlochförmigen Öffnung (24) verschoben wird, dessen Breitenquerschnitt kleiner als der Querschnitt des kragenförmigen Bereichs (22) des Doms (16) ausgebildet ist, dass die in dem Übergangsbereich (30) zwischen den zumindest zwei unterschiedlichen Breitenquerschnittsabmessungen der langlochförmigen Öffnung (24) angeordneten federnden Rastelemente (32) während des zweiten Montageschritts durch den Dom (16) erst zu den Längskanten der langlochförmigen Öffnung (24) gedrückt werden und, sobald der Dom (16) in den Bereich (28) der langlochförmigen Öffnung (24) verschoben ist, dessen Breitenquerschnitt kleiner als der Querschnitt des kragenförmigen Bereichs (22) des Doms (16) ist, in ihre Normalstellung zurückfedern.

## Claims

1. Headlamp for motor vehicles (10) comprising a housing (12), a lens (14) covering one end of the housing (12), at least one light source mounted inside the headlamp (10), at least one protrusion (16) from a rear section of the housing (12), where the protrusion is domed and designed to act as a duct for the electrical contacts of the headlamp (10), and at least one receptacle (18) for the headlamp (10) located on a vehicle body or a bracket (20) mounted for this purpose onto the vehicle body, wherein the dome (16) protruding from the rear of the housing (12) can be used to fix the headlamp (10) in the receptacle (18) on the vehicle body or the bracket (20) mounted for this purpose onto the vehicle body, **characterized in that** a collar-shaped area (22) is located along at least some of the domed protrusion (16), that the receptacle (18) has at least one oblong opening (24) made such that the cross-section in width across at least one section (26) of the oblong openings (24) is wider than the cross-section across the collar-shaped area (22) of the dome (16) and that the cross-section in width across at least one other section (28) of the oblong opening (24) is less wide than the cross-section across the collar-shaped area (22) of the dome (16), and **in that** the dome (16) located in a rear section of the headlamp (10) can be moved in the oblong opening (24) and fixed in a position by spring-loaded locating elements (32) installed in a transitory area (30) between the areas (26, 28) of the oblong opening (24) having different cross-sections in width.

2. Headlamp for motor vehicles of claim 1, **characterized in that** the oblong opening (24) has at least two areas (26) whose cross-sections in width are wider than the cross-section across the collar-shaped area (22) of the dome (16).

3. Headlamp for motor vehicles of claim 1 or 2, **characterized in that** the oblong opening (24) has the same number of areas (26, 28) whose cross-section in width is wider than the cross-section across the collar-shaped are (22) of the dome (16) and whose cross-section in width is less wide than the cross-section across the collar-shaped area (22) of the dome (16).

4. Headlamp for motor vehicles of claims 1 to 3, **characterized in that** the cross-section in width across the home position of the spring-loaded locating elements (32) is less wide than the cross-section across the dome (16).

5. Headlamp for motor vehicles of claims 1 to 4, **characterized in that** the distance (34) between the rear wall of the housing (12) of the headlamp (10) and the edge of the collar-shaped area (22) located on the dome (16) and facing towards the housing (12) is only a little longer than the thickness (36) of the part of the vehicle body or the locating element (20) around the oblong opening (24).

6. Headlamp for motor vehicles of claims 1 to 5, **characterized in that** the part of the vehicle body around the oblong opening (24) or the locating element (20) around the oblong opening (24) has a circumferential edge (38) that corresponds to the outer shape of the headlamp (10) and goes around the outer shape of the headlamp (10) when it is fully installed.

7. Headlamp for motor vehicles of claim 6, **characterized in that** the circumferential edge (38) is interrupted at at least one point (40).

8. Headlamp for motor vehicles of claims 1 to 7, **characterized in that** the part of the vehicle body around the oblong opening (24) or the locating element (20) around the oblong opening (24) has at least one other guiding area (42) for the headlamp (10).

9. Method of assembling a headlamp for motor vehicles (10) of one of the above claims, wherein said headlamp (10) can be fixed in a position by performing a relative motion between the dome (16) protruding from the rear area of the housing (12) and the receptacle (18) on the vehicle body or the bracket (20) attached to the vehicle body, **characterized in that**, at a first assembly step, the collar-shaped area (22) on the dome (16) is slipped through the part (26) of the oblong opening (24) whose cross-section in width is wider than the cross-section across the collar-shaped area (22) of the dome (16) and that, at a second assembly step, said headlamp (10) is pushed in the longitudinal direction of the oblong opening (24) and towards the area (28) of the oblong opening (24) whose cross-section in width is less wide than the cross-section across the collar-shaped area (22) of the dome (16) such that, at the second assembly step, the spring-loaded locating elements (32) located between the at least two differently sized cross-sections in width across the oblong opening (24) are first pushed apart by the dome (16) towards the long sides of the oblong opening (24) and then, when the dome (16) has moved into the section (28) of the oblong opening (24) whose cross-section in width is less wide than the cross-section across the collar-shaped area (22) of the dome (16) are allowed to spring back to their home position.

## Revendications

1. Feu de véhicule (10) avec un boîtier (12), une glace (14) fermant le boîtier (12), au moins une source lumineuse disposée dans le feu du véhicule (10), au moins un dôme (16) faisant saillie d'une zone arrière du boîtier (12) et permettant le passage de la connexion électrique du feu du véhicule (10) et au moins une zone de logement (18) pour le feu du véhicule (10) sur une carrosserie de véhicule ou sur un élément de maintien (20) fixé pour cela à la carrosserie de véhicule,
le feu de véhicule (10) pouvant être fixé dans la zone de logement (18) de la carrosserie de véhicule ou l'élément de maintien (20) disposé pour cela sur la carrosserie de véhicule par l'intermédiaire du dôme (16) faisant saillie de la zone arrière du boîtier (12),
**caractérisé en ce que**
le dôme saillant (16) présente au moins une zone en forme de collerette (22),
la zone de logement (18) présente au moins une ouverture en forme de trou oblong (24) qui est conçue de façon telle qu'au moins une zone (26) de l'ouverture en forme de trou oblong (24) est, dans la section en largeur, plus grande que la section de la zone en forme de collerette (22) du dôme (16) et au moins une autre zone (28) de l'ouverture en forme de trou oblong (24) est, dans la section en largeur, plus petite que la section de la zone en forme de collerette (22) du dôme (16)
et le dôme (16) disposé dans une zone arrière du feu de véhicule (10) pouvant être déplacé dans l'ouverture en forme de trou oblong (24) et être fixé par le fait qu'une zone de transition (30) entre les zones (26, 28) - ayant des dimensions de section en largeur différentes - de l'ouverture en forme de trou oblong (24) présente des éléments d'encliquetage élastiques (32).

2. Feu de véhicule selon la revendication 1, **caractérisé en ce que** l'ouverture en forme de trou oblong (24) présente au moins deux zones (26) dont la section en largeur est plus grande que la section de la zone en forme de collerette (22) du dôme (16).

3. Feu de véhicule selon la revendication 1 ou 2. **caractérisé en ce que** l'ouverture en forme de trou oblong (24) présente le même nombre de zones (26, 28) dont la section en largeur est plus grande que la section de la zone en forme de collerette (22) du dôme (16) et dont la section en largeur est plus petite que la section de la zone en forme de collerette (22) du dôme (16).

4. Feu de véhicule selon l'une des revendications 1 à 3, **caractérisé en ce que** la section en largeur des éléments d'encliquetage élastiques (32) est, en position normale, plus petite que la section du dôme (16).

5. Feu de véhicule selon l'une dés revendications 1 à 4, **caractérisé en ce que** la distance (34) entre la paroi arrière du boîtier (12) du feu de véhicule (10) et le bord, faisant face au boîtier (12), de la zone en forme de collerette (22) disposée sur le dôme (16) n'est que légèrement plus grande que l'épaisseur (36) de la zone de carrosserie ou de l'élément de maintien (20) entourant l'ouverture en forme de trou oblong (24).

6. Feu de véhicule selon l'une des revendications 1 à 5, **caractérisé en ce que** la zone de carrosserie entourant l'ouverture en forme de trou oblong (24) ou l'élément de maintien (20) entourant l'ouverture en forme de trou oblong (24) présente une nervure périphérique (38) qui correspond au contour extérieur du feu de véhicule (10) et englobe celui-ci à l'état monté.

7. Feu de véhicule selon la revendication 6. **caractérisé en ce que** la nervure périphérique (38) présente au moins une interruption (40).

8. Feu de véhicule selon l'une des revendications 1 à 7, **caractérisé en ce que** la zone de carrosserie entourant l'ouverture en forme de trou oblong (24) ou l'élément de maintien (20) entourant l'ouverture en forme de trou oblong (24) présente au moins une autre zone de guidage (42) pour le feu de véhicule (10).

9. Procédé de montage d'un feu de véhicule (10) conçu conformément aux revendications précédentes, dans lequel le feu de véhicule (10) peut être fixé par l'intermédiaire d'un mouvement relatif entre le dôme (16) faisant saillie de la zone arrière du boîtier (12) et la zone de logement (18) de la carrosserie de véhicule ou de l'élément de maintien (20) disposé pour cela sur la carrosserie de véhicule,
**caractérisé en ce que**
dans une première étape de montage, le dôme (16) avec la zone en forme de collerette (22) disposée dessus est passé à travers la zone (26) de l'ouverture en forme de trou oblong (24) dont la section en largeur est plus grande que la section de la zone en forme de collerette (22) du dôme (16), et
dans une deuxième étape de montage, le feu de véhicule (10) est, d'après l'orientation longitudinale de l'ouverture en forme de trou oblong (24), déplacé en direction de la zone (28) de l'ouverture en forme de trou oblong (24) dont la section en largeur est plus petite que la section de la zone en forme de collerette (22) du dôme (16), et
les éléments d'encliquetage élastiques (32) disposés dans la zone de transition (30) entre les au moins deux dimensions de section en largeur différentes de l'ouverture en forme de trou oblong (24) sont dans un premier temps poussés par le dôme (16) en direction des arêtes longitudinales de l'ouverture en forme de trou oblong (24) et, dès que le dôme (16) est déplacé dans la zone (28) de l'ouverture en forme de trou oblong (24) dont la section en largeur est plus petite que la section de la zone en forme de collerette (22) du dôme (16), reviennent élastiquement dans leur position normale.
